(19) Europäisches Patentamt
European Patent Office
Office européen des brevets

(11) **EP 3 739 800 A1**

(12) **EUROPEAN PATENT APPLICATION**
published in accordance with Art. 153(4) EPC

(43) Date of publication:
**18.11.2020 Bulletin 2020/47**

(51) Int Cl.:
***H04L 5/00*** *(2006.01)*

(21) Application number: **19751532.3**

(22) Date of filing: **12.02.2019**

(86) International application number:
**PCT/CN2019/074826**

(87) International publication number:
**WO 2019/154425 (15.08.2019 Gazette 2019/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.02.2018 CN 201810147401**

(71) Applicant: **HUAWEI TECHNOLOGIES CO., LTD.
Shenzhen, Guangdong 518129 (CN)**

(72) Inventors:
• **WANG, Lei
Shenzhen, Guangdong 518129 (CN)**
• **ZHANG, Lei
Shenzhen, Guangdong 518129 (CN)**
• **CHEN, Yan
Shenzhen, Guangdong 518129 (CN)**

(74) Representative: **Grünecker Patent- und
Rechtsanwälte
PartG mbB
Leopoldstraße 4
80802 München (DE)**

(54) **PILOT SIGNAL GENERATION METHOD AND APPARATUS**

(57) This application discloses a pilot signal generation method and apparatus, and relates to the communications field, to increase a quantity of pilot signals. The method includes: receiving, by a terminal, a first indication that is sent by a network device and that indicates whether to perform code division multiplexing on a first demodulation reference signal DMRS and a second DMRS, and a second indication used to determine a DMRS port number, where a symbol in which the first DMRS is located is not adjacent to a symbol in which the second DMRS is located; determining the DMRS port number based on the first indication and the second indication; if determining, based on the first indication, to perform the code division multiplexing on the first DMRS and the second DMRS, obtaining, based on the determined DMRS port number, a parameter used to generate a DMRS sequence, where the parameter used to generate the DMRS sequence includes a first orthogonal code, an element in the first orthogonal code is used to generate a first DMRS sequence, and an element in a second orthogonal code is used to generate a second DMRS sequence; generating the first DMRS sequence and the second DMRS sequence based on the parameter used to generate the DMRS sequence; and mapping the first DMRS sequence and the second DMRS sequence to corresponding time-frequency resources to generate a pilot signal.

| |
|---|
| A network device sends, to a terminal, a first indication that indicates whether to perform code division multiplexing on a first demodulation reference signal DMRS and a second DMRS, and a second indication used to determine a DMRS port number — 101 |
| The terminal receives the first indication that is sent by the network device and that indicates whether to perform the code division multiplexing on the first demodulation reference signal DMRS and the second DMRS, and the second indication that is sent by the network device and that is used to determine the DMRS port number — 102 |
| The terminal determines the DMRS port number based on the first indication and the second indication — 103 |
| If the terminal determines, based on the first indication, to perform the code division multiplexing on the first DMRS and the second DMRS, the terminal obtains, based on the DMRS port number, a parameter used to generate the DMRS sequence — 104 |
| The terminal generates the first DMRS sequence and the second DMRS sequence based on the parameter used to generate the DMRS sequence; and maps the first DMRS sequence and the second DMRS sequence to corresponding time-frequency resources to generate a pilot signal — 105 |

FIG. 8

**Description**

This application claims priority to Chinese Patent Application No. 201810147401.8, filed with the China Patent Office on February 12, 2018 and entitled "PILOT SIGNAL GENERATION METHOD AND APPARATUS", which is incorporated herein by reference in its entirety.

**TECHNICAL FIELD**

Embodiments of this application relate to the communications field, and in particular, to a pilot signal generation method and apparatus.

**BACKGROUND**

5G (5th-generation, also referred to as a 5th-generation mobile communications technology) is a popular standard of a next-generation cellular communications network, and covers three major scenarios including eMBB (enhanced mobile broadband, enhanced mobile broadband), uRLLC (ultrareliable & low latency communication, ultra-reliable low-latency communication), and mMTC (massive machine type communication, massive machine type communication). The eMBB scenario emphasizes a high throughput, the uRLLC scenario emphasizes high reliability and a low latency, and the mMTC scenario emphasizes a large quantity of connections.

In the mMTC scenario, a massive quantity of terminals need to perform uplink communication with a network device. For the uplink communication, the network device needs to configure different demodulation reference signals (demodulation reference signal, DMRS) for different terminals. The network device receives the DMRSs of the terminals in a pilot signal, to identify a user and perform channel estimation. In a communications system, a quantity of the DMRSs is limited. Therefore, in the mMTC scenario, when there are excessively many terminals, a limited quantity of DMRSs causes a shortage of available pilot signals, and this is a bottleneck of a network capacity.

**SUMMARY**

Embodiments of this application provide a pilot signal generation method and apparatus, to increase a quantity of pilot signals.

According to a first aspect, a pilot signal generation method is provided. The method includes: receiving, by a terminal, a first indication that is sent by a network device and that indicates whether to perform code division multiplexing on a first demodulation reference signal DMRS and a second DMRS, and a second indication used to determine a DMRS port number, where a symbol in which the first DMRS is located is not adjacent to a symbol in which the second DMRS is located; and determining, by the terminal, the DMRS port number based on the first indication and the second indication; if the terminal determines, based on the first indication, to perform the code division multiplexing on the first DMRS and the second DMRS, obtaining, based on the determined DMRS port number, a parameter used to generate a DMRS sequence, where the parameter used to generate the DMRS sequence includes a first orthogonal code, for example, the first orthogonal code may be of a length of two symbols, an element in the first orthogonal code is used to generate the first DMRS sequence and an element in a second orthogonal code is used to generate the second DMRS sequence; generating, by the terminal, the first DMRS sequence and the second DMRS sequence based on the parameter used to generate the DMRS sequence; and mapping the first DMRS sequence and the second DMRS sequence to corresponding time-frequency resources to generate a pilot signal. For example, the first DMRS may be a front-load (front-load) DMRS, the second DMRS may be an additional (additional) DMRS, and symbols in which the first DMRS and the second DMRS are located are usually not adjacent. When determining to multiplex the first DMRS and the second DMRS, the terminal may obtain, based on the DMRS port number, the parameter used to generate the DMRS sequence, where the parameter used to generate the DMRS sequence includes the first orthogonal code that has two elements. For example, the first orthogonal code may be (+1, +1) or (+1, -1). In this way, the terminal may generate the first DMRS sequence based on one element, generate the second DMRS sequence based on another element, and finally map the first DMRS sequence and the second DMRS sequence are to the corresponding time-frequency resources to generate the pilot signal. In the foregoing process, the code division multiplexing is further performed on the first DMRS and the second DMRS. Therefore, a quantity of pilot signals is increased, and more DMRS ports may be supported. In addition, because the code division multiplexing is performed on the first DMRS and the second DMRS by using an orthogonal code, the pilot signals corresponding to different DMRS sequences can be orthogonal to each other, interference between pilot signals is avoided, and accuracy of user detection performed by the network device and channel estimation performance are ensured.

In a possible design, a quantity of symbols of the first DMRS is 2, and the parameter used to generate the DMRS sequence further includes the second orthogonal code, where two elements in the second orthogonal code are used to generate the first DMRS sequence, and two elements in the second orthogonal code are used to generate the second DMRS sequence. For example, the second orthogonal code may be (+1, +1) or (+1, -1). When (+1, +1) is used to generate the first DMRS sequence, the two symbols of the first DMRS are multiplied by +1, and when (+1, -1) is used to generate the first DMRS sequence, one symbol of the first DMRS is multiplied by +1, and another symbol is multiplied by -1. A processing manner of the second DMRS sequence is similar. In this way, two-level code division multiplexing is implemented on one DMRS with reference to the first orthogonal code. The second orthogonal code includes a time-domain orthogonal code, for example, a time-division orthogonal cover code (time division orthogonal cover code, TD-OCC) or a frequency-domain orthogonal code, for example, a cyclic suffix/frequency-division orthogonal cover code (cyclic suffix\requency division orthogonal cover code, CS\FD-OCC).

In a possible design, the method further includes: if determining, based on the first indication, to perform the code division multiplexing on the first DMRS and the second DMRS, determining, by the terminal, not to use the time-frequency resource of the DMRS to send uplink data.

In a possible design, the determining, by the terminal, the DMRS port number based on the first indication and the second indication includes: determining, by the terminal, the DMRS port number based on the first indication, the second indication, and a quantity of data flows.

In a possible design, the method further includes: receiving, by the terminal, downlink control information DCI or a radio resource control RRC message sent by the network device, where the DCI includes the first indication, and the RRC message includes the first indication. Certainly, this embodiment of this solution is not limited to sending the first instruction in the foregoing two manners.

According to a second aspect, a pilot signal receiving method is provided. The method includes: sending, by a network device to a terminal, a first indication indicating whether to perform code division multiplexing on a first demodulation reference signal DMRS and a second DMRS, and a second indication used to determine a DMRS port number, where a symbol in which the first DMRS is located is not adjacent to a symbol in which the second DMRS is located; and receiving, by the network device, a pilot signal generated by the terminal device based on the first indication and the second indication. For beneficial effects, refer to the beneficial effects in the first aspect. Details are not described herein again.

In a possible design, the method further includes: sending, by the network device to the terminal, downlink control information DCI or a radio resource control RRC message, where the DCI includes the first indication, and the RRC message includes the first indication. Certainly, this embodiment of this solution is not limited to sending the first instruction in the foregoing two manners.

According to a third aspect, an embodiment of this application provides a pilot signal generation apparatus. The pilot signal generation apparatus may be configured to perform any method provided in the first aspect. The pilot signal generation apparatus may specifically be the terminal described in the first aspect and the second aspect, or the pilot signal generation apparatus is a functional entity, for example, may be a chip on the terminal provided in the first aspect and the second aspect, that implements the method provided in the first aspect.

In a possible design, the pilot signal generation apparatus may be divided into functional modules based on the method provided in the first aspect. For example, each functional module may be obtained through division based on each corresponding function, or two or more functions may be integrated into one functional module.

In another possible design, the pilot signal receiving apparatus may include a processor. The processor is configured to execute a computer program in a memory, so that any method provided in the first aspect is performed.

According to a fourth aspect, an embodiment of this application provides a pilot signal receiving apparatus. The pilot signal receiving apparatus may be configured to perform any method provided in the second aspect. The pilot signal receiving apparatus may specifically be the network device described in the first aspect and the second aspect, or the pilot signal generation apparatus is a functional entity, for example, may be a chip on the network device provided in the first aspect and the second aspect, that implements the method provided in the second aspect.

In a possible design, the pilot signal receiving apparatus may be divided into functional modules based on the method provided in the second aspect. For example, each functional module may be obtained through division based on each corresponding function, or two or more functions may be integrated into one functional module.

In another possible design, the pilot signal receiving apparatus may include a processor. The processor is configured to execute a computer program in a memory, so that any method provided in the second aspect is performed.

An embodiment of this application further provides a computer-readable storage medium. The computer-readable storage medium stores a computer instruction, and when the computer instruction runs on a computer, the computer is enabled to perform any one of the possible methods in the first aspect and the second aspect.

An embodiment of this application further provides a computer program product, where when the computer program product is run on a computer, any one of the methods provided in the first aspect and the second aspect is performed.

It may be understood that any apparatus, computer storage medium, or computer program product provided above is configured to perform a corresponding method provided in the foregoing description. Therefore, for a beneficial effect that can be achieved by any apparatus, computer storage medium, or computer program product, refer to a beneficial effect in a corresponding method. Details are not described herein again.

**BRIEF DESCRIPTION OF DRAWINGS**

To describe the technical solutions in the embodiments of this application or the prior art more clearly, the following briefly describes the accompanying drawings required for describing the embodiments.

FIG. 1 is a schematic diagram of a system architecture according to an embodiment of this application;
FIG. 2 is a schematic diagram of a pilot signal generation apparatus according to an embodiment of this application;
FIG. 3 is a schematic diagram of a pilot signal receiving apparatus according to an embodiment of this application;
FIG. 4 is a schematic diagram 1 of a resource mapping type according to an embodiment of this application;
FIG. 5 is a schematic diagram 2 of a resource mapping type according to an embodiment of this application;
FIG. 6 is a schematic diagram 3 of a resource mapping type according to an embodiment of this application;
FIG. 7 is a schematic diagram 4 of a resource mapping type according to an embodiment of this application;
FIG. 8 is a schematic flowchart of a pilot signal generation method according to an embodiment of this application;
FIG. 9 is a schematic diagram of generating a front-load DMRS sequence and an additional DMRS sequence according to an embodiment of this application;
FIG. 10 is a schematic diagram of generating a front-load DMRS sequence and an additional DMRS sequence according to another embodiment of this application;
FIG. 11 is a schematic diagram of a pilot signal generation apparatus according to another embodiment of this application; and
FIG. 12 is a schematic diagram of a pilot signal receiving apparatus according to another embodiment of this application.

**DESCRIPTION OF EMBODIMENTS**

The following clearly and completely describes the technical solutions in the embodiments of the present invention with reference to the accompanying drawings in the embodiments of this application.

In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of this application, "a plurality of" means two or more than two unless otherwise specified. In addition, to clearly describe the technical solutions in the embodiments of this application, "first", "second", and the like in the embodiments of this application are used to distinguish between different objects, or are used to distinguish between different processing on a same object, but are not used to describe a specific order of the objects. For example, a first indication and a second indication are indications used for different processing, and a first orthogonal code and a second orthogonal code are orthogonal codes used in different code division multiplexing processes.

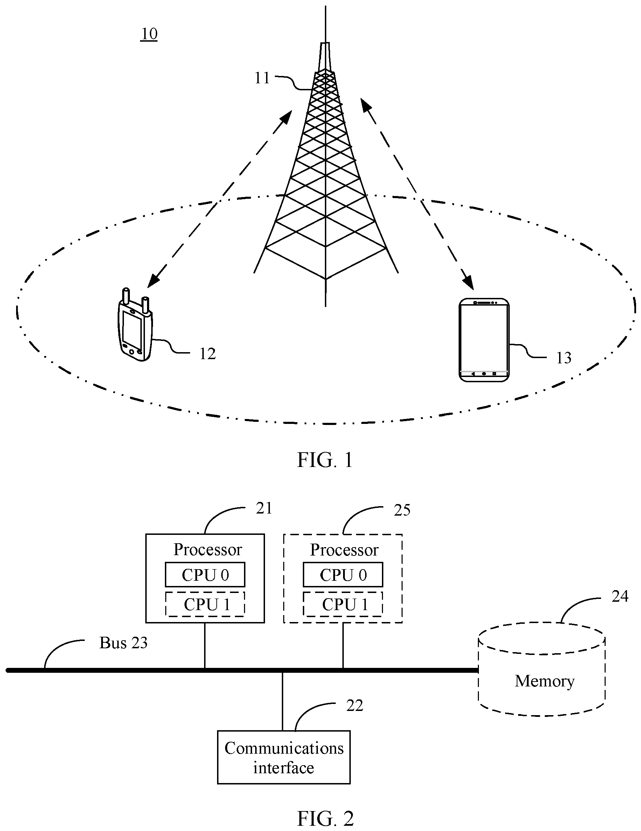

A pilot signal generation method provided in this embodiment of this application may be applied to a process in which a network device instructs a terminal to generate a pilot signal. FIG. 1 is a simplified schematic diagram of a system architecture according to an embodiment of this application. The system architecture includes a network device and one or more terminals. As shown in FIG. 1, the system architecture 10 may include a network device 11, a terminal 12, and a terminal 13. In this embodiment of this application, interaction between the network device 11 and the terminal 12 is used as an example herein to describe devices in the system architecture shown in FIG. 1.

In an application scenario, the network device 11 is configured to send a first indication (an indication indicating whether to perform code division multiplexing on a first DMRS and a second DMRS) and a second indication (an indication used to determine a DMRS port number) to the terminal 12. The terminal 12 is configured to receive the first indication and the second indication that are sent by the network device 11, and generate a pilot signal.

This application may be applied to an mMTC scenario of an NR (new radio access technology in 3GPP, NR for short, 3GPP new radio access technology) system. The network device 11 may specifically be a base station. The base station may be a wireless communication base station (base station, BS), a base station controller, or the like. Alternatively, the network device 11 may be referred to as a wireless access point, a transceiver station, a relay station, a cell, a transmit and receive port (Transmit and Receive Port, TRP), or the like. Specifically, the network device 11 is a wireless communications apparatus that is deployed in a radio access network and that is configured to provide a wireless communication function for the terminal. The network device 11 may be connected to the terminal, receive data sent by the terminal, and send the data to a core network device. A main function of the network device 11 includes one or more of the following functions: radio resource management, internet protocol (internet protocol, IP) header compression, user data flow encryption, MME selection when user equipment is attached, user plane data routing to a serving gateway (service gateway, SGW), organization and sending of a paging message, organization and sending of a broadcast message, measurement for mobility or scheduling, configuration of a measurement report, and the like. The network device 11 may include various forms of cellular base stations, home eNodeBs, cells, wireless transmission points, macro base stations, micro base stations, relay stations, wireless access points, and the like.

In systems using different radio access technologies, names of the base station may be different. For example, in an LTE system, the base station is referred to as an evolved nodeB (evolved NodeB, eNB or eNodeB); in the third generation mobile communications technology (the third generation telecommunication, 3G) system, the base station is referred to as a nodeB (node B); in an NR system, the base station is referred to as a gNB, a CU, a DU, or the like; and in a wireless local access system, the base station is referred to as an access point (access point). The name may vary with an evolution of the communications technology. In addition, in another possible case, the network device 11 may be another device that provides a wireless communication function for the terminal. For ease of description, in the embodiments of this application, an apparatus that provides a wireless communication function for the terminal is referred to as the network device.

The terminal 12 and the terminal 13 both refer to devices that include a wireless transceiver function and that may cooperate with a network side device such as an access network device and/or a core network device to provide a communication service for a user. Both the terminal 12 and the terminal 13 may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks or the Internet by using a radio access network (for example, a radio access network, RAN). The wireless terminal may include various handheld devices, in-vehicle devices, wearable devices, or computing devices that have a wireless communication function, or other processing devices connected to a wireless modem; and may further include a subscriber unit (subscriber unit), a cellular phone (cellular phone), a smart phone (smart phone), a wireless data card, a personal digital assistant (personal digital assistant, PDA) computer, a tablet computer, a wireless modem (modem), and a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). The solutions provided in the embodiments of this application are executed by a pilot signal generation apparatus and a pilot signal receiving apparatus. The pilot signal receiving apparatus may be a network device or a functional entity (for example, a chip) configured in the network device; and the pilot signal generation apparatus may be a terminal or a functional entity (for example, a chip) configured in the terminal.

FIG. 2 is a schematic composition diagram of a pilot signal generation apparatus according to an embodiment of this application. As shown in FIG. 2, the pilot signal generation apparatus may include at least one processor 21, a communications interface 22, and a bus 23.

The following describes each component of the pilot signal generation apparatus in detail with reference to FIG. 2.

The processor 21 is a control center of the pilot signal generation apparatus, and may be one processor, or may be a collective name of a plurality of processing elements. For example, the processor 21 may be a central processing unit (central processing unit, CPU), or an application specific integrated circuit (application specific integrated circuit, ASIC), or may be configured as one or more integrated circuits implementing this embodiment of this application, for example, one or more microprocessors (digital signal processor, DSP) or one or more field programmable gate arrays (field programmable gate array, FPGA).

The processor 21 may execute various functions of the pilot signal generation apparatus by running or executing a software program or an instruction.

Optionally, the pilot signal generation apparatus may further include a memory 24, configured to store the foregoing software program or instruction, and may further store data, for example, data required for generating a pilot signal.

In specific implementation, in an embodiment, the processor 21 may include one or more CPUs, for example, CPU 0 and CPU 1 shown in FIG. 2.

In specific implementation, in an embodiment, the pilot signal generation apparatus may include a plurality of processors, for example, the processor 21 and a processor 25 shown in FIG. 2. Each of the processors may be a single-core processor (single-CPU) or may be a multi-core processor (multi-CPU). The processor herein may be one or more devices, circuits, and/or processing cores for processing data (for example, a computer program instruction).

The memory 24 may be a read-only memory (read-only memory, ROM) or another type of static storage device that can store static information and an instruction, a random access memory (random access memory, RAM) or another type of dynamic storage device that can store information and an instruction. The memory 23 may alternatively be an electrically erasable programmable read-only memory (electrically erasable programmable read-only memory, EEPROM), a compact disc read-only memory (compact disc read-only memory, CD-ROM), another compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that is accessible by a computer, but is not limited thereto. The memory 24 may exist independently, and is connected to the processor 21 by using the bus 23. The memory 24 may alternatively be integrated with the processor 21.

The memory 24 is configured to store a software program that performs the solution of this application, and the processor 21 controls execution of the software program.

The communications interface 22 is configured to communicate with another device or a communications network. For example, the communications interface 22 is configured to communicate with the communications network such as an Ethernet, a radio access network (radio access network, RAN), or a wireless local area network (wireless local area networks, WLAN). The communications interface 22 may include all or a part of a baseband processor, and may further optionally include an RF processor. The RF processor is configured to send and receive an RF signal. The baseband processor is configured to process a baseband signal converted from the RF signal or a baseband signal to be converted into the RF signal.

The bus 23 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of the bus.

A structure of the device shown in FIG. 2 does not constitute a limitation on the pilot signal generation apparatus, and the pilot signal generation apparatus may include more or fewer components than those shown in the figure, or combine some components, or have different component arrangements. Optionally, the software program in this embodiment of this application may also be referred to as a computer-executable instruction. This is not specifically limited in this embodiment of this application. Although not shown, the pilot signal generation apparatus may further include a battery, a camera, a Bluetooth module, a global position system (global position system, GPS) module, a display screen, and the like. Details are not described herein again. Optionally, the software program in this embodiment of this application may also be referred to as a computer-executable instruction. This is not specifically limited in this embodiment of this application.

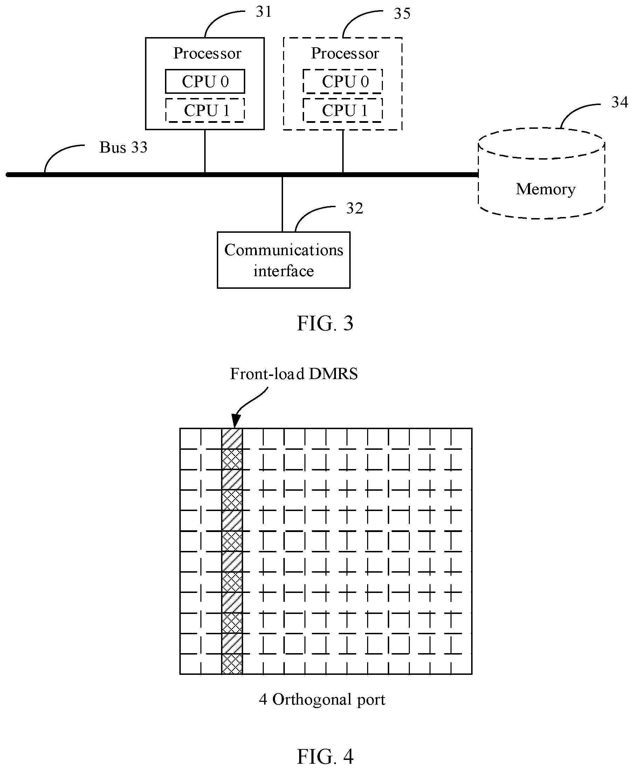

FIG. 3 is a schematic composition diagram of a pilot signal receiving apparatus according to an embodiment of this application. As shown in FIG. 3, the pilot signal receiving apparatus may include at least one processor 31, a communications interface 32, and a bus 33.

The following describes each component of the pilot signal receiving apparatus in detail with reference to FIG. 3.

The processor 31 may be a processor, or may be a collective name of a plurality of processing elements. For example, the processor 31 may be a general-purpose CPU, an ASIC, or one or more integrated circuits, for example, one or more DSPs or one or more FPGAs, configured to control program execution of the solution of this application. The processor 31 may execute various functions of the pilot signal receiving apparatus by running or executing a software program stored in a memory 34 and invoking data stored in the memory 34. Certainly, the pilot signal receiving apparatus may further include the memory 34.

In specific implementation, in an embodiment, the processor 31 may include one or more CPUs. For example, as shown in FIG. 3, the processor 31 includes CPU 0 and CPU 1.

In specific implementation, in an embodiment, the pilot signal receiving apparatus may include a plurality of processors. For example, as shown in FIG. 3, the pilot signal receiving apparatus includes the processor 31 and a processor 35. Each of the processors may be a single-CPU, or may be a multi-CPU. The processor herein may be one or more devices, circuits, and/or processing cores for processing data (for example, a computer program instruction).

The memory 34 may be a ROM or another type of static storage device that can store static information and a static instruction; or a RAM or another type of dynamic storage device that can store information and an instruction; or may alternatively be an EEPROM, a CD-ROM, another compact-disc storage, optical disc storage (including a compact disc, a laser disk, an optical disc, a digital versatile disc, a Blu-ray disc, or the like), magnetic disk storage medium or another magnetic storage device, or any other medium that can be configured to carry or store expected program code in a form of an instruction or a data structure and that is accessible by a computer, but is not limited thereto. The memory 34 may exist independently, and is connected to the processor 31 by using the bus 33. The memory 34 may alternatively be integrated with the processor 31.

The communications interface 32 is configured to communicate with another device or a communications network such as an Ethernet, a RAN, or a WLAN. The communications interface 33 may include a receiving unit for implementing a receiving function and a sending unit for implementing a sending function.

The bus 33 may be an ISA bus, a PCI bus, an EISA bus, or the like. The bus may be classified into an address bus, a data bus, a control bus, and the like. For ease of representation, only one thick line is used to represent the bus in FIG. 3, but this does not mean that there is only one bus or only one type of the bus.

A structure of the device shown in FIG. 3 does not constitute a limitation on the pilot signal receiving apparatus, and the pilot signal receiving apparatus may include more or fewer components than those shown in the figure, or combine some components, or have different component arrangements. The following describes the technical background in the embodiments of this application.

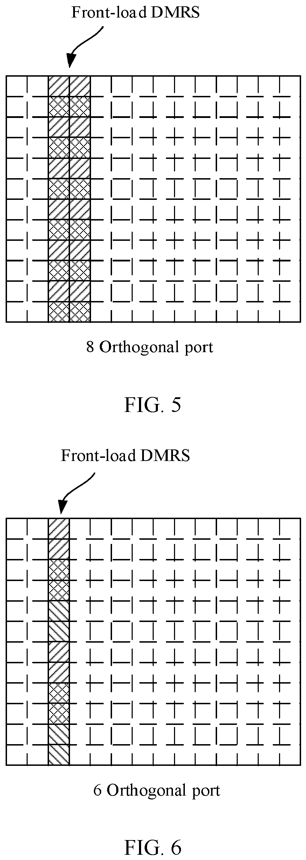

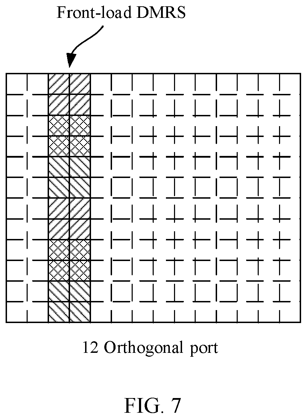

In a 5G NR system, there are two types of DMRSs used by the terminal for uplink transmission: a front-load DMRS and an additional DMRS. The front-load DMRS is generally located before a scheduling resource, so that the network device can perform an operation such as channel estimation as soon as possible, thereby reducing a delay. For example, for a mapping type A (mapping type A) of a resource, the front-load DMRS is located on a third orthogonal frequency division multiplexing (orthogonal frequency division multiplexing, OFDM) symbol and a fourth orthogonal frequency division multiplexing symbol in a slot (slot). For a mapping type B, the front-load DMRS is located on the foremost OFDM symbol of the scheduling resource. The mapping type A is shown in FIG. 4 to FIG. 7. In a manner of comb (Comb) frequency division, time division orthogonal cover code (TD-OCC), frequency division orthogonal cover code (FD-OCC), cyclic shift (CS, Cyclic Shift), or the like, the front-load DMRS may multiplex a maximum of 4, 8, 6, or 12 orthogonal ports. FIG. 4 and FIG. 5 correspond to a configuration type (configuration type) 1, and the configuration type 1 is applied to a cyclic prefix (cycle prefix, CP) modulation scheme of a physical uplink control channel (physical uplink control channel, PUCCH), and a discrete fourier transform (discrete fourier transform, DFT) modulation scheme of the physical uplink control channel (physical uplink shared channel, PUSCH); FIG. 6 and FIG. 7 correspond to a configuration type 2, and the configuration type 2 is applied to the cyclic prefix (cycle prefix, CP) modulation scheme of the physical uplink control channel (physical uplink control channel, PUCCH). In FIG. 4, four orthogonal ports may be multiplexed by using Comb 2 (where 2 indicates a quantity of orthogonal ports multiplexed in the Comb manner) and CS 2 (where 2 indicates a quantity of orthogonal ports multiplexed in the CS manner). In FIG. 5, eight orthogonal ports may be multiplexed by using Comb 2, CS 2, and TD-OCC 2 (where 2 indicates a quantity of orthogonal ports multiplexed in the TD-OCC manner). In FIG. 6, six orthogonal ports may be multiplexed by using Comb 3 and FD-OCC 2 (where 2 indicates a quantity of orthogonal ports multiplexed in the FD-OCC manner). In FIG. 7, twelve orthogonal ports may be multiplexed by using Comb 3, TD-OCC 2, and FD-OCC 2.

In addition, to support a high-speed scenario, the additional DMRS may be further configured for each terminal in the 5G NR standard. A manner of generating the additional DMRS is the same as that of generating the front-load DMRS. The additional DMRS is generally located behind the front-load DMRS and is not adjacent to a symbol in which the additional DMRS is located. The additional DMRS may be used to improve channel estimation performance. If the front-load DMRS is a single-symbol DMRS, an additional DMRS of one to three symbols may be configured. If the front-load DMRS is a dual-symbol DMRS, an additional DMRS of two symbols may be configured. To better describe a quantity of and labels of available DMRSs, a plurality of DMRS ports (port) are defined in the 5G NR standard. Different DMRS ports are orthogonal to each other. An orthogonal manner may be frequency division or code division. The frequency division means that different DMRS ports occupy different frequency domain resources, and the code division means that different DMRS ports occupy a same time-frequency resource. However, a DMRS sequence is generated by using different orthogonal codes or different cyclic shift manners.

For different DMRS configurations, different maximum quantities of DMRS ports are supported. For four configurations: configuration type 1 single symbol, configuration type 1 dual symbol, configuration type 2 single symbol, and configuration type 2 dual symbol, a maximum of 4, 8, 6, and 12 DMRS ports are respectively supported. Each different DMRS port has a different number, which is 0 to a maximum quantity of DMRS ports minus 1. In the following solution, the front-load DMRS is used as a first DMRS, and the additional DMRS is used as a second DMRS for description.

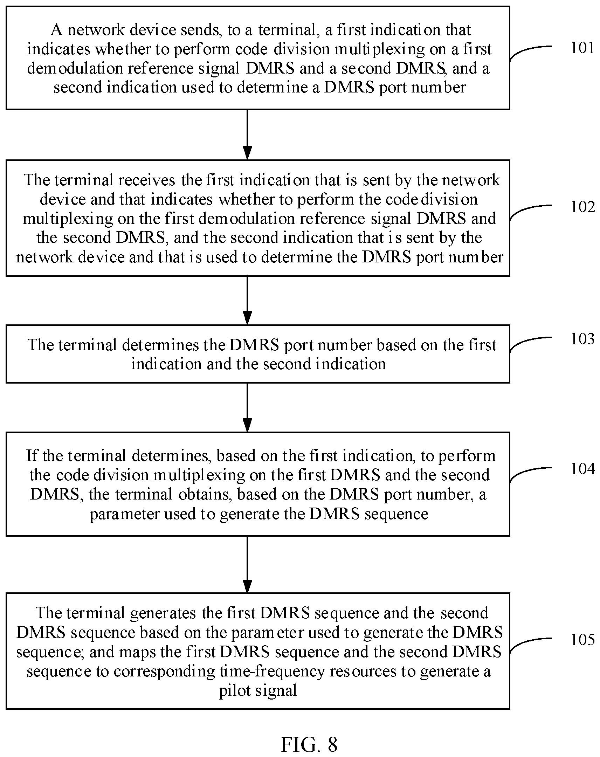

A pilot signal generation method provided in this application is described in the following with reference to FIG. 8. It should be noted that names of indications or parameters between devices in the following embodiments of this application are merely examples, and may be other names in specific implementation. This is uniformly described herein. This is not specifically limited in this embodiment of this application.

101: A network device sends, to a terminal, a first indication that indicates whether to perform code division multiplexing on a first demodulation reference signal DMRS and a second DMRS, and a second indication used to determine a DMRS port number.

A symbol in which the first DMRS is located is not adjacent to a symbol in which the second DMRS is located. Specifically, the terminal receives downlink control information (downlink control information, DCI) or a radio resource control (radio resource control, RRC) message sent by the network device, where the DCI includes the first indication, and the RRC message includes the first indication. For example, a new RRC configuration parameter may be added to the NR standard to send the first indication. In the present invention, the RRC configuration parameter is named UL-DMRS-port-extension (uplink demodulation reference signal port extension). When the UL-DMRS-port-extension=enabled (enabled), the terminal performs the code division multiplexing on a front-load DMRS and an additional DMRS. When the UL-DMRS-port-extension is not configured or UL-DMRS-port-extension=Disabled (disabled), the terminal does not perform the code division multiplexing on the front-load DMRS and the additional DMRS, that is, a manner of an existing NR standard is implemented. For example, when the system runs in a scenario (for example, an mMTC scenario) in which there are an especially large quantity of terminals, the network device may configure the UL-DMRS-port-extension=enabled.

102: The terminal receives the first indication that is sent by the network device and that indicates whether to perform the code division multiplexing on the first demodulation reference signal DMRS and the second DMRS, and the second indication that is sent by the network device and that is used to determine the DMRS port number.

103: The terminal determines the DMRS port number based on the first indication and the second indication.

The terminal determines the DMRS port number based on the first indication, the second indication, and a quantity of data flows. For example, currently, in the 3GPP channel coding and multiplexing (Multiplexing and channel coding) series TS38.212 in the NR standard, table (Table) 7.3.1.1.2-12/13/14/15 is defined for configuration type 1 by using 4 bits. Specifically, before the DMRS port number is determined, a corresponding table needs to be determined based on values of parameters such as PUSCH-tp (PUSCH-transform precoding, PUSCH precoding), UL-DMRS-config-type, UL-DMRS-max-len, and rank, where PUSCH-tp=Disabled indicates that a CP-OFDM waveform is used for uplink transmission; PUSCH-tp=Enable indicates that a waveform of DFT-S-OFDM (DFT-spread (spread)-OFDM) is used for uplink transmission; UL-DMRS-config-type indicates a DMRS configuration type used in an uplink (where for example, UL-DMRS-config-type=1 indicates configuration type 1, UL-DMRS-config-type=2 indicates configuration type 2, and so on); UL-DMRS-max-len indicates a maximum quantity of uplink DMRS symbols; and rank indicates the quantity of data flows, and may be determined by using an SRS (Sounding Reference Signal, sounding reference signal) resource identifier field or a precoding information & number of layers field in DCI. In a possible implementation, a configuration of an uplink DMRS may be the same as a configuration of a downlink DMRS. In this case, the UL-DMRS-config-type and the UL-DMRS-max-len may be respectively replaced with a DL-DMRS-config-type and a DL-DMRS-max-len, where the DL-DMRS-config-type indicates a configuration type of a DMRS used in a downlink, and the DL-DMRS-max-len indicates a maximum quantity of symbols of the downlink DMRS. In this application, a table further needs to be selected with reference to a value of the UL-DMRS-port-extension. Therefore, in this application, Table 7.3.1.1.2-12A/13A/14A/15A is obtained through extension based on the value of the UL-DMRS-port-extension in Table 7.3.1.1.2-12/13/14/15. For example, for the configuration type 1, this embodiment of this application provides Table 7.3.1.1.2-12 for which PUSCH-tp=Disabled, DL-DMRS-config-type=1, UL-DMRS-max-len=2, rank=1, and UL-DMRS-port-extension=Disabled, as shown in the following table.

**Table 7.3.1.1.2-12**

| Value | Number of DMRS CDM groups without data | DMRS ports | Number of front-load symbols |
|-------|----------------------------------------|------------|------------------------------|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 1 |
| 7 | 2 | 1 | 1 |
| 8 | 2 | 2 | 1 |
| 9 | 2 | 3 | 1 |
| 10 | 2 | 4 | 1 |
| 11 | 2 | 5 | 1 |
| 12 | 2 | 6 | 2 |
| 13 | 2 | 7 | 2 |
| 14-15 | Reserved (reserved) | Reserved (reserved) | Reserved (reserved) |

For example, this embodiment of this application provides Table 7.3.1.1.2-12A for which PUSCH-tp=Disabled, DL-DMRS-config-type=1, UL-DMRS-max-len=2, rank=1, and UL-DMRS-port-extension=Enabled, as shown in the following table.

**Table 7.3.1.1.2-12A**

| Value | Number of DMRS CDM groups without data | DMRS ports | Number of front-load symbols |
|---|---|---|---|
| 0 | 2 | 0 | 2 |
| 1 | 2 | 1 | 2 |
| 2 | 2 | 2 | 2 |
| 3 | 2 | 3 | 2 |
| 4 | 2 | 4 | 2 |
| 5 | 2 | 5 | 2 |
| 6 | 2 | 6 | 2 |
| 7 | 2 | 7 | 2 |
| 8 | 2 | 8 | 2 |
| 9 | 2 | 9 | 2 |
| 10 | 2 | 10 | 2 |
| 11 | 2 | 11 | 2 |
| 12 | 2 | 12 | 2 |
| 13 | 2 | 13 | 2 |
| 14 | 2 | 14 | 2 |
| 15 | 2 | 15 | 2 |

Value in the first column is a value of an Antenna Ports field in the RRC or the DCI.

The DMRS port number can be obtained by querying the table based on the value. If UL-DMRS-port-extension=enabled, the terminal finds, based on Table 7.3.1.1.2-12A, information such as DMRS port number and Number of DMRS CDM (code division multiplexing, code division multiplexing) groups without data, and Number of front-load symbols that are corresponding to Value. Number of DMRS CDM groups without data indicates a quantity of DMRS CDM groups to which no data is mapped, and a value of Number of DMRS CDM groups without data may be 1 or 2. For the configuration type 1, a total quantity of DMRS-CDM groups is 2. When Number of DMRS CDM groups without data is 1, it indicates that there is still one DMRS-CDM group whose time-frequency resource position may be used to transmit data. For this application, if UL-DMRS-port-extension=disable, for this table, refer to the existing NR protocol: 3GPP channel coding and multiplexing (Multiplexing and channel coding) series TS 38.212. In Table 7.3.1.1.2-12, Number of DMRS CDM groups without data may be 1 or 2. If UL-DMRS-port-extension=enable, the original table needs to be modified, as shown in Table 7.3.1.1.2-12A, to be specific, a corresponding DMRS port number is added. In order not to increase overheads of control information, each value of Number of DMRS CDM groups without data is a maximum quantity of CDM groups (where for example, for the configuration type 1, a maximum quantity of CDM groups is 2, and for the configuration type 2, a maximum quantity of CDM groups is 3). In other words, for the terminal, the terminal cannot send uplink data by using the time-frequency resource of the DMRS. Therefore, if determining, based on the first indication, to perform the code division multiplexing on the first DMRS and the second DMRS, the terminal determines not to use the time-frequency resource of the DMRS to send uplink data.

In another example, for configuration 2, 4 bits are used to define table (Table) 7.3.1.1.2-20/21/22/23. This embodiment of this application provides Table 7.3.1.1.2-20 for which PUSCH-tp=disabled, DL-DMRS-config-type=2, UL-DMRS-max-len=2, rank=1, and UL-DMRS-port-extension=disabled, as shown in the following table.

**Table 7.3.1.1.2-20**

| Value | Number of DMRS CDM groups without data | DMRS ports | Number of front-load symbols |
|---|---|---|---|
| 0 | 1 | 0 | 1 |
| 1 | 1 | 1 | 1 |
| 2 | 2 | 0 | 1 |

(continued)

| Value | Number of DMRS CDM groups without data | DMRS ports | Number of front-load symbols |
|-------|----------------------------------------|------------|------------------------------|
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

For example, this embodiment of this application provides Table 7.3.1.1.2-20A for which PUSCH-tp=disabled, DL-DMRS-config-type=2, UL-DMRS-max-len=2, rank=1, and UL-DMRS-port-extension=enabled, as shown in the following table.

**Table 7.3.1.1.2-20A**

| Value | Number of DMRS CDM groups without data | DMRS ports | Number of front-load symbols |
|-------|----------------------------------------|------------|------------------------------|
| 0 | 3 | 0 | 2 |
| 1 | 3 | 1 | 2 |
| 2 | 3 | 2 | 2 |
| 3 | 3 | 3 | 2 |
| 4 | 3 | 4 | 2 |
| 5 | 3 | 5 | 2 |

(continued)

| Value | Number of DMRS CDM groups without data | DMRS ports | Number of front-load symbols |
|-------|----------------------------------------|------------|------------------------------|
| 6 | 3 | 6 | 2 |
| 7 | 3 | 7 | 2 |
| 8 | 3 | 8 | 2 |
| 9 | 3 | 9 | 2 |
| 10 | 3 | 10 | 2 |
| 11 | 3 | 11 | 2 |
| 12 | 3 | 12 | 2 |
| 13 | 3 | 13 | 2 |
| 14 | 3 | 14 | 2 |
| 15 | 3 | 15 | 2 |
| 16 | 3 | 16 | 2 |
| 17 | 3 | 17 | 2 |
| 18 | 3 | 18 | 2 |
| 19 | 3 | 19 | 2 |
| 20 | 3 | 20 | 2 |
| 21 | 3 | 21 | 2 |
| 22 | 3 | 22 | 2 |
| 23 | 3 | 23 | 2 |
| 24-31 | Reserved | Reserved | Reserved |

Table 7.3.1.1.2-12/12A and Table 7.3.1.1.2-20/20A are described by using only rank=1 as an example. Certainly, when rank is of another value, for example, in the NR standard, when rank is equal to 2, 3, or 4 in the configuration type 1, there is another Table 7.3.1.1.2-13/14/15. Number of DMRS CDM groups without data, DMRS ports, and Number of front-load symbols in Table 7.3.1.1.2-13/14/15 are modified to obtain Table 7.3.1.1.2-13A/14A/15A in the foregoing manner of modifying Table 7.3.1.1.2-12 to obtain Table 7.3.1.1.2-12A. For other tables, for example, an extension mode in which Table 7.3.1.1.2-21/22/23 is extended to obtain Table 7.3.1.1.2-21A/22A/23A in the configuration type 2 is similar to the foregoing extension mode. Details are not described herein again.

104: If the terminal determines, based on the first indication, to perform the code division multiplexing on the first DMRS and the second DMRS, the terminal obtains, based on the DMRS port number, a parameter used to generate the DMRS sequence.

The parameter used to generate the DMRS sequence includes a first orthogonal code. For example, the first orthogonal code may be of a length of two symbols. One element in the first orthogonal code is used to generate a first DMRS sequence, and another element in a second orthogonal code is used to generate a second DMRS sequence. In addition, if a quantity of symbols of the first DMRS is 2, the parameter used to generate the DMRS sequence further includes the second orthogonal code, both elements in the second orthogonal code are used to generate the first DMRS sequence, and both elements in the second orthogonal code are used to generate the second DMRS sequence, where the second orthogonal code includes a time-domain orthogonal code or a frequency-domain orthogonal code.

105: The terminal generates the first DMRS sequence and the second DMRS sequence based on the parameter used to generate the DMRS sequence; and maps the first DMRS sequence and the second DMRS sequence to corresponding time-frequency resources to generate a pilot signal.

For example, when a quantity of symbols of the front-load DMRS is 1 and UL-DMRS-port-extension=enabled, the network device may allocate an orthogonal code to the terminal, and the orthogonal code is associated with the DMRS port number. Therefore, the orthogonal code allocated by the network device to the terminal may be obtained by querying a table based on the DMRS port number. Each element of the orthogonal code is separately multiplied by the front-load DMRS and the additional DMRS to generate the first DMRS sequence and the second DMRS sequence. For example, the orthogonal code is (+1, +1) or (+1, -1). If the orthogonal code allocated to the terminal is (+1, +1), both the front-loaeded DMRS and the additional DMRS are multiplied by 1, that is, remain unchanged. If the orthogonal code allocated to the terminal device is (+1, -1), the front-loaeded DMRS is multiplied by 1, and the additional DMRS is multiplied by -1.

Certainly, if the quantity of symbols of the front-load DMRS is 2, the terminal specifically generates the DMRS sequence according to the following formula:

$$w_{\mathrm{f}}\left(k'\right) \cdot w_{\mathrm{t}}\left(l'\right) \cdot \tilde{w}_t(l) \cdot \overline{r}\left(m\right)$$

For a configuration of a dual-symbol DMRS, $l'$ may be 0 or 1. That $l'$ is 0 indicates that a first symbol in the DMRS is generated, and that $l'$ is 1 indicates that a second symbol in the DMRS is generated. For a configuration of a single-symbol DMRS, $l'$ is 0. $k'$ may be 0 and 1, and that $k'$ is 0 indicates the first complex symbol in two complex symbols on which the code division multiplexing is performed in frequency domain; and that $k'$ is 1 indicates the second complex symbol of the two complex symbols on which the code division multiplexing is performed in frequency domain. $w_{\mathrm{f}}(k')$ is the frequency-domain orthogonal code, for example, CS/FD-OCC. $w_{\mathrm{t}}(l')$ is the time-domain orthogonal code, for example, TD-OCC. $\tilde{w}_t(l)$ is the time-domain orthogonal code. k is a subcarrier sequence number. l is a sequence number occupied by a symbol. $\overline{r}(m)$ is an original DMRS sequence, for example, a pseudorandom sequence or a Zadoff-Chu sequence. The foregoing parameter is bound to the DMRS port number. The foregoing parameter that corresponds to the DMRS port number and that is used to generate the DMRS sequence may be obtained by querying a table based on the DMRS port number $p_j$.

Therefore, according to the foregoing formula, in TS 38.211, a parameter table 6.4.1.1.3-1 of PUSCH DMRS configuration type 1 is extended to obtain the following table 6.4.1.1.3-1A (where an extension part is $\tilde{w}_t(l)$, and corresponds to the first orthogonal code in step 104):

**Table 6.4.1.1.3-1A**

| $p$ | CDM group | $\Delta$ | $w_{\mathrm{f}}(k')$ | | $w_{\mathrm{t}}(l')$ | | $\tilde{w}_t(l)$ | |
|---|---|---|---|---|---|---|---|---|
| | | | $k' = 0$ | $k' = 1$ | $l' = 0$ | $l' = 1$ | $l = 0,1,2,3$ | $l \neq 0,1,2,3$ |
| 0 | 0 | 0 | +1 | +1 | +1 | +1 | +1 | +1 |
| 1 | 0 | 0 | +1 | -1 | +1 | +1 | +1 | +1 |
| 2 | 1 | 1 | +1 | +1 | +1 | +1 | +1 | +1 |
| 3 | 1 | 1 | +1 | -1 | +1 | +1 | +1 | +1 |
| 4 | 0 | 0 | +1 | +1 | +1 | -1 | +1 | +1 |
| 5 | 0 | 0 | +1 | -1 | +1 | -1 | +1 | +1 |
| 6 | 1 | 1 | +1 | +1 | +1 | -1 | +1 | +1 |
| 7 | 1 | 1 | +1 | -1 | +1 | -1 | +1 | +1 |
| 8 | 0 | 0 | +1 | +1 | +1 | +1 | +1 | -1 |
| 9 | 0 | 0 | +1 | -1 | +1 | +1 | +1 | -1 |
| 10 | 1 | 1 | +1 | +1 | +1 | +1 | +1 | -1 |
| 11 | 1 | 1 | +1 | -1 | +1 | +1 | +1 | -1 |
| 12 | 0 | 0 | +1 | +1 | +1 | -1 | +1 | -1 |
| 13 | 0 | 0 | +1 | -1 | +1 | -1 | +1 | -1 |
| 14 | 1 | 1 | +1 | +1 | +1 | -1 | +1 | -1 |
| 15 | 1 | 1 | +1 | -1 | +1 | -1 | +1 | -1 |

Table 6.4.1.1.3-4 shows symbol positions of the additional DMRS. As shown in the following table, position of last PUSCH symbol is a position of a last symbol of a PUSCH. The following table shows symbol positions if the additional DMRS includes 0, 1, 2, or 3 symbols in PUSCH mapping type A (mapping type A) or mapping type B (mapping type B). $l_0$ indicates that the symbol position may be 2 or 3.

**Table 6.4.1.1.3-4**

| PUSCH duration in symbols | DM-RS positions $\bar{l}$ | | | | | | | |
|---|---|---|---|---|---|---|---|---|
| | PUSCH mapping type A | | | | PUSCH mapping type B | | | |
| | UL-DMRS-add-pos | | | | UL-DMRS-add-pos | | | |
| | 0 | 1 | 2 | 3 | 0 | 1 | 2 | 3 |
| $\leq 7$ | $l_0$ | - | | | 0 | - | | |
| 8 | $l_0$ | - | | | 0 | 0, 5 | | |
| 9 | $l_0$ | - | | | 0 | 0, 5 | | |
| 10 | $l_0$ | $l_0$, 8 | | | 0 | 0, 7 | | |
| 11 | $l_0$ | $l_0$, 8 | | | 0 | 0, 7 | | |
| 12 | $l_0$ | $l_0$, 8 | | | 0 | 0, 9 | | |
| 13 | $l_0$ | $l_0$, 10 | | | 0 | 0, 10 | | |
| 14 | $l_0$ | $l_0$, 10 | | | [0] | 0, 10 | | |

A parameter table 6.4.1.1.3-2 of PUSCH DMRS configuration type 2 is extended to obtain the following table 6.4.1.1.3-2A (where an extension part is $\tilde{w}_t(l)$, and corresponds to the first orthogonal code in step 104):

**Table 6.4.1.1.3-2A**

| $p$ | CDM group | $\Delta$ | $w_f(k')$ | | $w_t(l')$ | | $\tilde{w}_t(l)$ | |
|---|---|---|---|---|---|---|---|---|
| | | | $k' = 0$ | $k' = 1$ | $l' = 0$ | $l' = 1$ | $l = 0,1,2,3$ | $l \neq 0,1,2,3$ |
| 0 | 0 | 0 | +1 | +1 | +1 | +1 | +1 | +1 |
| 1 | 0 | 0 | +1 | -1 | +1 | +1 | +1 | +1 |
| 2 | 1 | 2 | +1 | +1 | +1 | +1 | +1 | +1 |
| 3 | 1 | 2 | +1 | -1 | +1 | +1 | +1 | +1 |
| 4 | 2 | 4 | +1 | +1 | +1 | +1 | +1 | +1 |
| 5 | 2 | 4 | +1 | -1 | +1 | +1 | +1 | +1 |
| 6 | 0 | 0 | +1 | +1 | +1 | -1 | +1 | +1 |
| 7 | 0 | 0 | +1 | -1 | +1 | -1 | +1 | +1 |
| 8 | 1 | 2 | +1 | +1 | +1 | -1 | +1 | +1 |
| 9 | 1 | 2 | +1 | -1 | +1 | -1 | +1 | +1 |
| 10 | 2 | 4 | +1 | +1 | +1 | -1 | +1 | +1 |
| 11 | 2 | 4 | +1 | -1 | +1 | -1 | +1 | +1 |
| 12 | 0 | 0 | +1 | +1 | +1 | +1 | +1 | -1 |
| 13 | 0 | 0 | +1 | -1 | +1 | +1 | +1 | -1 |
| 14 | 1 | 2 | +1 | +1 | +1 | +1 | +1 | -1 |
| 15 | 1 | 2 | +1 | -1 | +1 | +1 | +1 | -1 |
| 16 | 2 | 4 | +1 | +1 | +1 | +1 | +1 | -1 |
| 17 | 2 | 4 | +1 | -1 | +1 | +1 | +1 | -1 |
| 18 | 0 | 0 | +1 | +1 | +1 | -1 | +1 | -1 |
| 19 | 0 | 0 | +1 | -1 | +1 | -1 | +1 | -1 |
| 20 | 1 | 2 | +1 | +1 | +1 | -1 | +1 | -1 |

(continued)

| $p$ | CDM group | $\Delta$ | $w_f(k')$ | | $w_t(l')$ | | $\tilde{w}_t(l)$ | |
|---|---|---|---|---|---|---|---|---|
| | | | $k' = 0$ | $k' = 1$ | $l' = 0$ | $l' = 1$ | $l = 0,1,2,3$ | $l \neq 0,1,2,3$ |
| 21 | 1 | 2 | +1 | -1 | +1 | -1 | +1 | -1 |
| 22 | 2 | 4 | +1 | +1 | +1 | -1 | +1 | -1 |
| 23 | 2 | 4 | +1 | -1 | +1 | -1 | +1 | -1 |

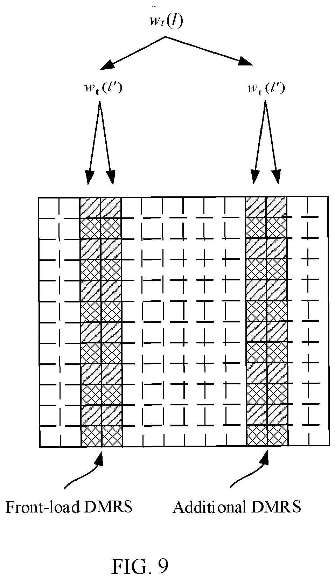

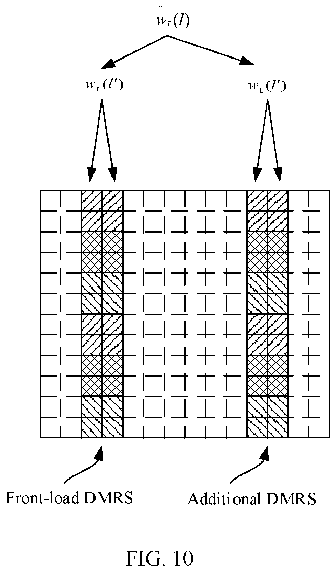

Referring to Table 6.4.1.1.3-1, when the quantity of symbols of the front-load DMRS is 2, the network device first allocates an orthogonal code to the terminal. Using $w_t(l')$ as an example, the orthogonal code $w_t(l')$ is associated with the DMRS port number p. Therefore, the orthogonal code $w_t(l')$ allocated by the network device to the terminal may be obtained by querying a table based on the DMRS port number. Referring to FIG. 9 and FIG. 10, FIG. 9 is a schematic diagram of generating a front-load DMRS sequence and an additional DMRS sequence in configuration type 1. FIG. 10 is a schematic diagram of generating a front-load DMRS sequence and an additional DMRS sequence in configuration type 2. Each element of the orthogonal code $w_t(l')$ is separately multiplied by each symbol of the front-load DMRS. For example, the orthogonal code $w_t(l')$ is (+1, +1) or (+1, -1), and is specifically determined based on the DMRS port number. If an orthogonal code allocated to the terminal is (+1, +1), two symbols of the front-load DMRS are multiplied by 1, that is, remain unchanged. If an orthogonal code allocated to the terminal is (+1, -1, the first symbol in the front-load DMRS is multiplied by 1, and the second symbol is multiplied by -1. A processing manner of the additional DMRS is similar to that of the front-load DMRS. In addition, a processing manner of allocating an orthogonal code $w_f(k')$ is similar to that of $w_t(l')$. $w_t(l')$ is used only for orthogonal processing in time domain, and $w_f(k')$ is used for orthogonal processing in frequency domain. When UL-DMRS-port-extension=enabled, the network device further allocates another orthogonal code $\tilde{w}_t(l)$ to the terminal device. The orthogonal code $\tilde{w}_t(l)$ is associated with the DMRS port number p. Therefore, the orthogonal code $\tilde{w}_t(l)$ allocated by the network device to the terminal may be obtained by querying a table based on the DMRS port number. Each element of the orthogonal code $\tilde{w}_t(l)$ is separately multiplied by the front-load DMRS and the additional DMRS. For example, the orthogonal code is (+1, +1) or (+1, -1). If the orthogonal code allocated to the terminal device is (+1, +1), both the front-loaeded DMRS and the additional DMRS are multiplied by 1, that is, remain unchanged. If the orthogonal code allocated to the terminal device is (+1, -1), the front-loaeded DMRS is multiplied by 1, and the additional DMRS is multiplied by -1, to obtain the front-load DMRS sequence and the additional DMRS sequence. The network device may allocate the orthogonal code to the terminal in a plurality of manners. For example, the network device may allocate a DMRS port number to the terminal, and the port number is associated with the orthogonal code described above. Alternatively, the network device may directly allocate a sequence number of the orthogonal code to the terminal.

In the foregoing embodiments, the code division multiplexing is further performed on the first DMRS and the second DMRS. Therefore, a quantity of pilot signals is increased, and more DMRS ports may be supported. In addition, because the code division multiplexing is performed on the first DMRS and the second DMRS by using an orthogonal code, the pilot signals corresponding to different DMRS sequences can be orthogonal to each other, interference between pilot signals is avoided, and accuracy of user detection performed by the network device and channel estimation performance are ensured.

It should be noted that values in the tables in the foregoing embodiments are merely examples, and do not construe any limitation on the present invention. It may be understood that a value in the table may alternatively be adjusted to another value. This is not limited in this application.

The foregoing mainly describes the solutions provided in the embodiments of this application from a perspective of the methods. To implement the foregoing functions, the solutions provided in the embodiments of this application include corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the pilot signal generation apparatus or the pilot signal receiving apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

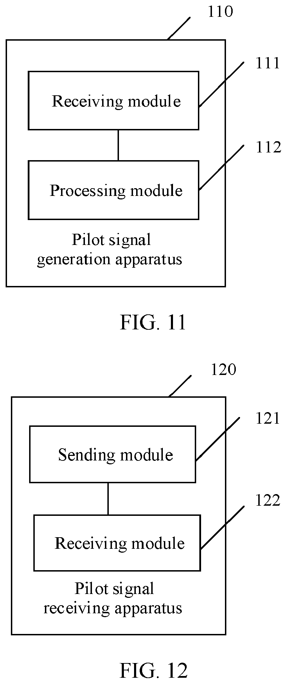

FIG. 11 is a schematic structural diagram of a pilot signal generation apparatus according to an embodiment of this application. The pilot signal generation apparatus shown in FIG. 11 may be configured to perform steps performed by a corresponding terminal in any pilot signal generation method provided above. The pilot signal generation apparatus 110 may include a receiving module 111 and a processing module 112. The receiving module 111 is configured to receive a first indication that is sent by a network device and that indicates whether to perform code division multiplexing on a first demodulation reference signal DMRS and a second DMRS, and a second indication used to determine a DMRS port number, where a symbol in which the first DMRS is located is not adjacent to a symbol in which the second DMRS is located. The processing module 112 is configured to determine the DMRS port number based on the first indication and the second indication that are received by the receiving module. The processing module 112 is further configured to: if determining, based on the first indication, to perform the code division multiplexing on the first DMRS and the second DMRS, obtain, based on the DMRS port number, a parameter used to generate a DMRS sequence, where the parameter used to generate the DMRS sequence includes a first orthogonal code, an element in the first orthogonal code is used to generate a first DMRS sequence, and one element in the second orthogonal code is used to generate a second DMRS sequence. The processing module 112 is further configured to generate the first DMRS sequence and the second DMRS sequence based on the parameter used to generate the DMRS sequence and map the first DMRS sequence and the second DMRS sequence to corresponding time-frequency resources to generate a pilot signal.

For description of related content in this embodiment, refer to the foregoing method embodiment. Details are not described herein again. In an example, with reference to the pilot signal generation apparatus shown in FIG. 2, the receiving module 111 may correspond to the communications interface 22 in FIG. 2; and the processing module 112 may correspond to the processors 21 and 25 in FIG. 2.

FIG. 12 is a schematic structural diagram of a pilot signal receiving apparatus 120 according to an embodiment of this application. The pilot signal receiving apparatus 120 shown in FIG. 12 may be configured to perform steps performed by a corresponding network device in any pilot signal generation method provided above. The pilot signal receiving apparatus 120 may include a sending module 121 and a receiving module 122. The sending module 121 is configured to send, to a terminal, a first indication that indicates whether to perform code division multiplexing on a first demodulation reference signal DMRS and a second DMRS, and a second indication used to determine a DMRS port number, where a symbol in which the first DMRS is located is not adjacent to a symbol in which the second DMRS is located. The receiving module 122 is configured to receive a pilot signal generated by the terminal device based on the first indication and the second indication.

For description of related content in this embodiment, refer to the foregoing method embodiment. Details are not described herein again. In an example, with reference to the pilot signal receiving apparatus shown in FIG. 3, the sending module 121 and the receiving module 122 may correspond to the communications interface 32 in FIG. 3.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A pilot signal generation method, comprising:

   receiving, by a terminal, a first indication that is sent by a network device and that indicates whether to perform code division multiplexing on a first demodulation reference signal DMRS and a second DMRS, and a second indication used to determine a DMRS port number, wherein a symbol in which the first DMRS is located is not adjacent to a symbol in which the second DMRS is located;
   determining, by the terminal, the DMRS port number based on the first indication and the second indication;
   if the terminal determines, based on the first indication, to perform the code division multiplexing on the first DMRS and the second DMRS, obtaining, based on the DMRS port number, a parameter used to generate a DMRS sequence, wherein the parameter used to generate the DMRS sequence comprises a first orthogonal code, an element in the first orthogonal code is used to generate a first DMRS sequence, and an element in the second orthogonal code is used to generate a second DMRS sequence; and
   generating, by the terminal, the first DMRS sequence and the second DMRS sequence based on the parameter used to generate the DMRS sequence; and mapping the first DMRS sequence and the second DMRS sequence to corresponding time-frequency resources to generate a pilot signal.

2. The method according to claim 1, wherein
   a quantity of symbols of the first DMRS is 2, and the parameter used to generate the DMRS sequence further comprises the second orthogonal code, wherein two elements in the second orthogonal code are used to generate the first DMRS sequence, and two elements in the second orthogonal code are used to generate the second DMRS sequence.

3. The method according to claim 2, wherein the second orthogonal code comprises a time-domain orthogonal code or a frequency-domain orthogonal code.

4. The method according to claim 1, wherein the determining, by the terminal, the DMRS port number based on the first indication and the second indication comprises:
   determining, by the terminal, the DMRS port number based on the first indication, the second indication, and a quantity of data flows.

5. The method according to any one of claims 1 to 4, wherein the method further comprises: receiving, by the terminal, downlink control information DCI or a radio resource control RRC message sent by the network device, wherein the DCI comprises the first indication, and the RRC message comprises the first indication.

6. A pilot signal receiving method, comprising:

   sending, by a network device to a terminal, a first indication that indicates whether to perform code division multiplexing on a first demodulation reference signal DMRS and a second DMRS, and a second indication used to determine a DMRS port number, wherein a symbol in which the first DMRS is located is not adjacent to a symbol in which the second DMRS is located; and
   receiving, by the network device, a pilot signal generated by the terminal device based on the first indication and the second indication.

7. The method according to claim 6, wherein the method further comprises:
   sending, by the network device to the terminal, downlink control information DCI or a radio resource control RRC message, wherein the DCI comprises the first indication, and the RRC message comprises the first indication.

8. A pilot signal generation apparatus, comprising:

   a receiving module, configured to receive a first indication that is sent by a network device and that indicates whether to perform code division multiplexing on a first demodulation reference signal DMRS and a second DMRS, and a second indication used to determine a DMRS port number, wherein a symbol in which the first DMRS is located is not adjacent to a symbol in which the second DMRS is located; and
   a processing module, configured to determine a DMRS port number based on the first indication and the second indication that are received by the receiving module, wherein
   the processing module is further configured to: if determining, based on the first indication, to perform the code division multiplexing on the first DMRS and the second DMRS, obtain, based on the DMRS port number, a parameter used to generate a DMRS sequence, wherein the parameter used to generate the DMRS sequence comprises a first orthogonal code, an element in the first orthogonal code is used to generate a first DMRS sequence, and an element in the second orthogonal code is used to generate a second DMRS sequence; and
   the processing module is further configured to generate the first DMRS sequence and the second DMRS sequence based on the parameter used to generate the DMRS sequence; and map the first DMRS sequence and the second DMRS sequence to corresponding time-frequency resources to generate a pilot signal.

9. The apparatus according to claim 8, wherein
   a quantity of symbols of the first DMRS is 2, and the parameter used to generate the DMRS sequence further comprises the second orthogonal code, wherein two elements in the second orthogonal code are used to generate the first DMRS sequence.

10. The apparatus according to claim 9, wherein the second orthogonal code comprises a time-domain orthogonal code or a frequency-domain orthogonal code.

11. The apparatus according to claim 8, wherein the processing module is specifically configured to determine the DMRS port number based on a quantity of data flows and the first indication and the second indication that are received by the receiving unit.

12. The apparatus according to any one of claims 8 to 11, wherein the receiving module is further configured to receive downlink control information DCI or a radio resource control RRC message sent by the network device, wherein the DCI comprises a first indication, and the RRC message comprises the first indication.

13. A pilot signal receiving apparatus, comprising:

   a sending module, configured to send, to a terminal, a first indication that indicates whether to perform code division multiplexing on a first demodulation reference signal DMRS and a second DMRS, and a second indication used to determine a DMRS port number, wherein a symbol in which the first DMRS is located is not adjacent to a symbol in which the second DMRS is located; and
   a receiving module, configured to receive a pilot signal generated by the terminal device based on the first indication and the second indication.

14. The apparatus according to claim 13, wherein the sending module is specifically configured to send downlink control information DCI or a radio resource control RRC message to the terminal, wherein the DCI comprises a first indication, and the RRC message comprises the first indication.

15. A computer-readable storage medium, comprising a computer instruction, wherein when the computer instruction runs on a computer, the method according to any one of claims 1 to 7 is performed.

FIG. 1

FIG. 2

FIG. 3

Front-load DMRS

4 Orthogonal port

FIG. 4

Front-load DMRS

8 Orthogonal port

FIG. 5

Front-load DMRS

6 Orthogonal port

FIG. 6

Front-load DMRS

12 Orthogonal port

FIG. 7

A network device sends, to a terminal, a first indication that indicates whether to perform code division multiplexing on a first demodulation reference signal DMRS and a second DMRS, and a second indication used to determine a DMRS port number — 101

The terminal receives the first indication that is sent by the network device and that indicates whether to perform the code division multiplexing on the first demodulation reference signal DMRS and the second DMRS, and the second indication that is sent by the network device and that is used to determine the DMRS port number — 102

The terminal determines the DMRS port number based on the first indication and the second indication — 103

If the terminal determines, based on the first indication, to perform the code division multiplexing on the first DMRS and the second DMRS, the terminal obtains, based on the DMRS port number, a parameter used to generate the DMRS sequence — 104

The terminal generates the first DMRS sequence and the second DMRS sequence based on the parameter used to generate the DMRS sequence; and maps the first DMRS sequence and the second DMRS sequence to corresponding time-frequency resources to generate a pilot signal — 105

FIG. 8

Front-load DMRS    Additional DMRS

FIG. 9

FIG. 10

110

Receiving module — 111

Processing module — 112

Pilot signal
generation apparatus

FIG. 11

120

Sending module — 121

Receiving module — 122

Pilot signal
receiving apparatus

FIG. 12

## INTERNATIONAL SEARCH REPORT

| | |
|---|---|
| International application No. | |
| | **PCT/CN2019/074826** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L H04W H04Q

Documentation searched other than minimum documentation to the extent that such documents are included in the fields searched

Electronic data base consulted during the international search (name of data base and, where practicable, search terms used)

CNPAT, CNKI, WPI, EPODOC,3GPP: 第一, 第二, first, second, dm-rs, dm rs, dmrs, 码分复用, CDM, 解调参考信号, front-load, 额外, additional, 端口, port, 正交码, orthogonal code, walsh

**C. DOCUMENTS CONSIDERED TO BE RELEVANT**

| Category* | Citation of document, with indication, where appropriate, of the relevant passages | Relevant to claim No. |
|---|---|---|
| A | NTT DOCOMO, INC. "Remaining Details on DM-RS"<br>*3GPP TSG RAN WG1 Meeting NR Ad-Hoc#3, R1-1716088*, 21 September 2017 (2017-09-21),<br>section 2 | 1-15 |
| A | ETRI. "Discussion on Downlink DMRS Design"<br>*3GPP TSG RAN WG1 Meeting #89, R1-1708094*, 19 May 2017 (2017-05-19),<br>entire document | 1-15 |
| A | NOKIA et al. "On Details of DL DM-RS for NR Physical Data Channels"<br>*3GPP TSG RAN WG1#88 bis, R1-1705970*, 07 April 2017 (2017-04-07),<br>entire document | 1-15 |
| A | CN 107306177 A (HUAWEI TECHNOLOGIES CO., LTD.) 31 October 2017 (2017-10-31)<br>entire document | 1-15 |
| A | US 2017288835 A1 (LG ELECTRONICS INC.) 05 October 2017 (2017-10-05)<br>entire document | 1-15 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **30 April 2019** | **10 May 2019** |

| Name and mailing address of the ISA/CN | Authorized officer |
|---|---|
| **National Intellectual Property Administrator, PRC (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/074826**

| Patent document cited in search report | | | Publication date (day/month/year) | Patent family member(s) | | | Publication date (day/month/year) |
|---|---|---|---|---|---|---|---|
| CN | 107306177 | A | 31 October 2017 | WO | 2017181818 | A1 | 26 October 2017 |
| | | | | US | 2019052502 | A1 | 14 February 2019 |
| | | | | EP | 3442136 | A1 | 13 February 2019 |
| | | | | KR | 20180135033 | A | 19 December 2018 |
| US | 2017288835 | A1 | 05 October 2017 | WO | 2016048074 | A1 | 31 March 2016 |
| | | | | CN | 107078874 | A | 18 August 2017 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810147401